# EUROPEAN PATENT SPECIFICATION

(11) **EP 1 589 127 B1**
(45) Date of publication and mention of the grant of the patent: **13.10.2010**
(21) Application number: 04009735.4
(22) Date of filing: 23.04.2004
(51) Int. Cl.: C22C 38/18, C22C 38/34, C22C 38/00, F16C 33/62, F16C 33/56, F16C 33/34, F16C 33/32

(54) **Bearing parts**
Lagerteile
Eléments de roulement

(43) Date of publication of application: 26.10.2005
(73) Proprietor: JTEKT Corporation, Osaka-shi Osaka 542-8502 (JP)
(72) Inventor: Dodoro, Hirofumi, Chuo-ku Osaka-shi Osaka 542-0081 (JP); Goto, Masao, Chuo-ku Osaka-shi Osaka 542-0081 (JP)
(74) Representative: Weber, Joachim

(56) References cited:
- EP-A- 0 458 646
- GB-A- 2 344 828
- US-A- 5 998 042
- US-A1- 2002 139 454
- US-B1- 6 409 846
- PATENT ABSTRACTS OF JAPAN vol. 2000, no. 22, 9 March 2001 (2001-03-09) -& JP 2001 131712 A (NTN CORP), 15 May 2001 (2001-05-15)
- PATENT ABSTRACTS OF JAPAN vol. 2003, no. 02, 5 February 2003 (2003-02-05) -& JP 2002 285297 A (HITACHI METALS LTD), 3 October 2002 (2002-10-03)

## Description

### BACKGROUND OF THE INVENTION

The present invention relates to bearing parts such as rolling elements and bearing rings(races) that are required to have good dampability (shock absorbability).

For recent machinery, not only high performance and accuracy but also noiselessness is an important factor in quality evaluation, and it is much desired that bearings could satisfy the requirement of noiselessness.

For example, in rolling bearings for gear supports of transmissions, the bearing may act as a vibration-transmitting route to transmit gear-working vibration to the case and the vibration may cause noises. Because of the limitations in planning transmissions, an additional damping member will be difficult to dispose between a bearing and a case since it may require an additional space and may cause stiffness reduction to increase working vibration.

The present applicant has previously proposed bearing parts formed of damping steel containing from 0.2 to 0.6 % by weight of C, from 5.0 to 15.0 % by weight of Cr and from 0.2 to 1.3 % by weight of Si, and comprising Fe and inevitable impurities as the remaining, which have been treated for carbonization or carbonitriding to form a hardened layer on their surfaces (see Patent Reference 1).

### Patent Reference 1

JP-A-5-125488

The above bearing parts are formed of damping steel that contains from 0.2 to 0.6 % by weight of C, from 5.0 to 15.0 % by weight of Cr and from 0.2 to 1.3 % by weight of Si, and comprises Fe and inevitable impurities as the remaining, and therefore they ensure good dampability. In addition, they are treated for carbonization or carbonitriding to form a hardened layer on their surfaces. Therefore, even when bearings that comprise the bearing part are used under the condition where lubricating oil is contaminated with impurities, for example, as in rolling bearings for gear supports of transmissions, the bearing parts may still ensure a satisfactory rolling fatigue life.

However, the related bearing parts require the treatment of carbonization or carbonitriding to form a hardened layer on their surfaces, and are therefore problematic in that the thermal treatment is expensive and increases the production costs.

### SUMMARY OF THE INVENTION

An object of the present invention is to provide bearing parts of high dampability that solve the above-mentioned problems can be produced at low costs.

The bearing parts of the invention are formed of damping steel that contains from 0.2 to 0.6 % by weight of C, from 5.0 to 15.0 % by weight of Cr, from 0.2 to 1.3 % by weight of Si, from 0.05 to 0.20 % by weight ofN, and comprises Fe and inevitable impurities as the remaining.

The reasons for defining the alloy components are mentioned below.

### C: from 0.2 to 0.6 % by weight.

If the C content is smaller than 0.2 % by weight, then the intended surface hardness could not be attained by ordinary hardening; but if larger than 0. 6 % by weight, then giant carbide may be readily formed in the steel that contains Cr in the above-mentioned range, and the steel could not be sufficiently tough, and if so, in addition, fine cracks to be the starting points of flaking may be readily formed and propagated in the steel to shorten the rolling fatigue life of the bearing parts formed of the steel. Moreover, the increase in the C content may lower the internal friction value of steel to thereby detract from the dampability thereof. Accordingly, the C content should be defined to fall between 0.2 and 0.6 % by weight.

### Cr: from 5.0 to 15.0 % by weight.

Cr improves dampability, but if its content is smaller than 5.0 % by weight, it is ineffective.

### Si: from 0.2 to 1.3 % by weight.

Si is an element necessary for deoxidation in steel production, and it is effective for strengthening the solid solution of steel and for improving the temper softening resistance thereof to thereby prolong the bearing life of the steel. If deoxidation is not enough, oxide-type non-metallic inclusions will increase in steel, and they may be a source of stress concentration to give fine cracks that may be the starting points of flaking. Thus formed, the fine cracks may be readily propagated in the steel to shorten the rolling fatigue life of the bearing parts formed of the steel. However, if the Si content is smaller than 0.2 % by weight, deoxidation in steel production will be insufficient; but if larger than 1.3 % by weight, then the mechanical strength of steel will lower and, in addition, the workability such as malleability and machinability of steel will also lower. Accordingly, the Si content should be defined to fall between 0.2 and 1.3 % by weight.

### N: from 0.05 to 0.20 % by weight.

N is an element necessary for making the steel have a surface hardness, in terms of Rockwell C hardness (HRC) of at least 57 as a result of ordinary hardening. However, if the N content is smaller than 0.05 % by weight, it is ineffective; but if larger than 0.20 % by weight; then it lowers the internal friction value of steel to thereby detract from the dampability thereof. Accordingly, the N content should be defined to fall between 0.05 and 0.20 % by weight, but is preferably from 0.09 to 0.15 % by weight.

Not interfering with the above-mentioned properties of steel, the bearing parts may contain Mn, Cu, Ni, Mo and others.

Since the bearing parts of the invention are formed of damping steel that contains from 0.2 to 0.6 % by weight of C, from 5.0 to 15.0 % by weight of Cr, from 0.2 to 1.3 % by weight of Si, from 0.05 to 0.20 % by weight of N, and comprises Fe and inevitable impurities as the remaining, they are tough and ensure good dampability. In addition, their surface hardness can be increased through ordinary hardening. Therefore, when the bearing parts, which are tough, are treated to have a surface hardness, HRC of at least 63, then they ensure a satisfactorily long rolling life even under the condition where lubricating oil is contaminated with impurities, for example, as in transmissions. Moreover, since the bearing parts of the invention may be hardened in an ordinary manner, not requiring carbonization or carbonitriding like that for the above-mentioned conventional bearing parts, they are inexpensive in point of their thermal treatment and their production costs are therefore low.

The damping steel for the bearing parts of the invention may be hardened in an ordinary manner to have a surface hardness, in terms of Rockwell C hardness of at least 57. The bearing parts having a surface hardness, HRC of at least 67 ensure a long rolling life.

### DETAILED DESCRIPTION OF PREFERRED EMBODIMENTS

The invention is described below with reference to its Examples and Comparative Examples.

Seven steel samples of different composition as in Table 1 were prepared, and they were individually worked into bearing rings of rollingbearings in an ordinary manner. Thus produced, the bearing rings were thermally treated as in Table 1. The surface hardness HRC of each sample was measured. The data are given in Table 1.

**Table 1**

| | | Material Composition (wt.%) | | | | | Thermal Treatment | Surface Hardness (HRC) |
|---|---|---|---|---|---|---|---|---|
| | | Fe | C | Cr | Si | N | | |
| Example 1 | | basis | 0.40 | 9.0 | 0.30 | 0.10 | ordinary hardening 1 | 63 |
| Comparative Example | 1 | basis | 0.23 | 5.7 | 0.23 | - | carbonitriding hardening | 63 |
| | 2 | basis | 0.58 | 13.5 | 1.25 | - | carbonitriding hardening | 64 |
| | 3 | basis | 1.01 | 1.41 | 0.22 | - | ordinary hardening 2 | 61 |
| | 4 | basis | 0.20 | 0.75 | 0.20 | - | carbonization hardening | 62 |
| | 5 | basis | 0.65 | 8.96 | 0.83 | - | ordinary hardening 1 | 60 |
| | 6 | basis | 0.64 | 9.06 | 0.24 | - | ordinary hardening 1 | 60 |

The condition for each thermal treatment in Table 1 is mentioned below.

### Carbonitriding hardening:

The sample is carbonitrided at 930°C for 3 hours, then nitrided at 850°C for 5 hours, cooled in oil, and then tempered at 180°C for 2 hours.

### Ordinary hardening 1:

The sample is heated at 1050°C for 40 minutes for austenization, then cooled in oil, treated for subzero cooling, and then tempered at 180°C for 2 hours.

### Carbonization hardening:

The sample is carbonized at 930°C for 4.5 hours, then heated at 820°C for 20 minutes, cooled in oil, and then tempered at 180°C for 2 hours.

### Ordinary hardening 2:

The sample is heated at 840°C for 40 minutes for austenization, then cooled in oil, and thereafter tempered at 180°C for 2 hours.

As is obvious from Table 1, the surface hardness of the sample of Example 1 is comparable to that of the samples of Comparative Examples 1 and 2, and is higher than that of the samples of Comparative Examples 3 to 6.

Next, the bearing ring of Example 1 and Comparative Examples 1 to 6 was combined with a cage formed of SPB1 and a rolling element formed of SUJ2, and assembled into a bearing. This was tested for its life. In the test, the lubricating oil is turbine oil VG68, the radial load is 918 kgf, the number of revolutions is 2500 rpm, and the number of N is 10.

As a result, the life of the bearing with the bearing ring of Example 1 was at least 10 × 10⁷ (10 × 10⁷ is the highest limit in the test). On the other hand, the B₁₀ life of the bearing with the bearing ring of Comparative Examples 3 to 6 was 9 x 10⁶. The life of the bearing with the bearing ring of Example 1 is more than 10 times that of the bearing with the bearing ring of Comparative Examples 3 to 6. The life of the bearing with the bearing ring of Comparative Examples 1 and 2 was at least 10 x 10⁷, like that of the bearing with the bearing ring of Example 1.

The bearing with the bearing ring of Example 1 and Comparative Example 3 was tested in an impact test for its vibration dampability. The vibration dampability of the bearing tested was derived from the ratio of the vibration input from the hammering outer ring (outer diameter, 62 mm) to the output to the pickup fitted to the outer ring (transmission coefficient).

As a result, the vibration damping ratio of the bearing with the bearing ring of Example 1 was 0.00037, and that of the bearing with the bearing ring of Comparative Example 3 was 0.00022. The vibration dampability of the bearing with the bearing ring of Example 1 was better. In addition, the vibration dampability of the bearing with the bearing ring of Example 1 was comparable to that of the bearing with the bearing ring of Comparative Examples 1 and 2.

## Claims

1. A bearing part comprising damping steel that contains from 0.2 to 0.6 % by weight of C, from 5.0 to 9.0 % by weight of Cr, from 0.2 to 1.3 % by weight of Si, from 0.05 to 0.20 % by weight of N, and comprises Fe and inevitable impurities as the remaining.

2. The bearing part according to claim 1, wherein the damping steel is hardened in an ordinary manner to have a surface hardness, in terms of Rockwell C hardness of at least 57.

3. The bearing part according to claim 1, wherein the Cr content falls between 6.0 and 9 % by weight.

4. The bearing part according to claim 1, wherein the N content falls between 0.09 and 0.15 % by weight.

## Patentansprüche

1. Lagerteil, umfassend einen Dämpfungsstahl, der 0,2 bis 0,6 Gew.% C, 5,0 bis 9,0 Gew.% Cr, 0,2 bis 1,3 Gew.% Si, 0,05 bis 0,20 Gew.% N enthält und Fe und unvermeidliche Verunreinigungen als Restmaterial umfasst.

2. Lagerteil nach Anspruch 1, wobei der Dämpfungsstahl in üblicher Weise gehärtet wird, um eine Oberflächenhärte nach Rockwell-C-Härte von zumindest 57 aufzuweisen.

3. Lagerteil nach Anspruch 1, wobei der Cr-Anteil zwischen 6,0 und 9 Gew.% beträgt.

4. Lagerteil nach Anspruch 1, wobei der N-Anteil zwischen 0,09 und 0,15 Gew.% beträgt.

## Revendications

1. Partie de roulement comprenant un acier d'amortissement qui contient de 10,2 à 0,6 % en poids de C, de 5,0 à 9,0 % en poids de Cr, de 0,2 à 1,3 % en poids de Si, de 0,05 à 0,20 % en poids de N, et comprend Fe et des impuretés inévitables en tant que partie restante.

2. Partie de roulement selon la revendication 1, dans laquelle l'acier d'amortissement est durci de manière ordinaire pour présenter une dureté de surface, selon la dureté Rockwell, d'au moins 57.

3. Partie de roulement selon la revendication 1, dans laquelle la teneur en Cr est entre 6,0 et 9 % en poids.

4. Partie de roulement selon la revendication 1, dans laquelle la teneur en N est entre 0,09 et 0,15 % en poids.
